# EUROPEAN PATENT SPECIFICATION

(11) **EP 3 064 975 B1**
(45) Date of publication and mention of the grant of the patent: **23.01.2019**
(21) Application number: 16157043.7
(22) Date of filing: 24.02.2016
(51) Int. Cl.: G02B 7/182, G02B 26/08, G02B 26/10, G02B 27/01

(54) **OPTICAL SCANNING APPARATUS, SUBSTRATE FIXING METHOD IN OPTICAL SCANNING APPARATUS, IMAGE DISPLAY APPARATUS, AND VEHICLE**
OPTISCHE ABTASTVORRICHTUNG, SUBSTRATFIXIERVERFAHREN IN DER OPTISCHEN ABTASTVORRICHTUNG, BILDANZEIGEVORRICHTUNG UND FAHRZEUG
APPAREIL DE BALAYAGE OPTIQUE, PROCÉDÉ DE FIXATION DE SUBSTRAT DANS UN APPAREIL DE BALAYAGE OPTIQUE, APPAREIL D'AFFICHAGE D'IMAGE ET VÉHICULE

(30) Priority: 06.03.2015 JP 2015045073
(43) Date of publication of application: 07.09.2016
(73) Proprietor: Ricoh Company, Ltd., Tokyo 143-8555 (JP)
(72) Inventor: YOSHIMURA, Kenichi, Kanagawa 222-8530 (JP)
(74) Representative: SSM Sandmair

(56) References cited:
- EP-A1- 1 087 248
- EP-A1- 2 570 843
- WO-A1-2014/103803
- JP-A- 2009 154 264
- US-A1- 2013 327 834

## Description

### BACKGROUND OF THE INVENTION

### 1. Field of the Invention

The present invention relates to an optical scanning apparatus, a substrate fixing method in the optical scanning apparatus, an image display apparatus, and a vehicle.

### 2. Description of the Related Art

In recent years, market expectations for a head-up display (HuD) mounted in a vehicle have been increasing as an application which enables a driver to recognize an alarm or information with little eye movement, and technology development of HuDs has been advanced. In particular, with the progress of in-vehicle sensing technologies represented by a term "advanced driving assistance system (ADAS)", driving environment information and passenger information have become available to be taken into the vehicle. Further, attention has been paid to a HuD as an "output of ADAS" for providing information to a driver.

As a projection method of a HuD, a "panel method" is known in which an intermediate image is formed by an imaging device such as a liquid crystal display, a digital mirror device (DMD), or the like. Further, a "laser scan method" is known in which a laser beam emitted from a laser diode (hereinafter referred to as LD) is made to scan by a two-dimensional scanning device.

In particular, in the latter laser scan method, different from the panel method in which an image is formed by partial light shielding of full screen emission, each pixel can be assigned to emission or non-emission, and thus, a high-contrast image can be formed.

Meanwhile, high positional accuracy is required for a DMD in the panel method and an optical deflector of a HuD in the laser scan method, which deflector deflects a laser beam emitted from an LD. As a result, high-accuracy positional adjustment in six axes (X, Y, Z, α, β, γ) directions becomes necessary for an optical system which includes a light source, a condenser lens, etc. Further, in order to assure the reliability required for an automotive product such as a HuD, it is necessary that the deflector or the DMD is fixed by a high-reliability method.

For example, in order to adjust a position of a MEMS module with high accuracy, a technique has been proposed in which positional adjustment is performed by aligning the MEMS module with a pin prepared beforehand on a base, and, after the positional adjustment, the MEMS module is fixed to the base by an adhesive or a screw (refer to, for example, Patent Document 1).

In the above technique, the initial positional accuracy may be assured. However, under environmental conditions required for an automotive product, the position or the posture may change greatly and high reliability may not be assured.

The present invention has been made by considering the above problem, and it is an object of the present invention to provide an optical scanning apparatus in which predetermined parts are fixed to each other in a state in which high reliability is assured even under the environmental conditions required for an automotive product.

### [Citation List]

### [Patent Document]

[Patent Document 1] Japanese Laid-Open Patent Application No. 2007-178523

EP 1 087 248 A1 relates to a planar optical scanner and its mounting structure. The document relates to a planar type optical scanning apparatus and a mounting structure thereof, which enables further miniaturization and cost reduction. By locating a mirror, on the surface side of a moveable plate that is axially supported by torsion bars on a silicon substrate, and a drive coil on the rear side thereof, the area of the moveable plate can be reduced. Furthermore, in an optical scanning apparatus fixing region on a package substrate, a cavity and conductive patterns are provided, the construction being such that the electrode terminals of the drive coil provided on the rear face of the silicon substrate of the optical scanning apparatus are connected with the conductive patterns to mount the optical scanning apparatus on the package substrate.

US 2013/0327834 A1 relates to a laser scanning module with rotatably adjustable laser scanning assembly. A laser scanning module employing a laser scanning assembly mounted within a module housing using a mechanism that allows the laser scanning assembly to be rotated to an angular position within the engine housing so that light collection, beam folding and light collection mirrors in the module housing are optically aligned. A PC board is mounted on a side of the housing and has a configuration of elongated apertures of open-ended and/or closed geometry, arranged in a non-parallel manner. An electromagnetic coil structure, associated with the laser scanning assembly, has a linear array of electrically-conductive pins that project through the configuration of elongated holes, at locations along the elongated holes that are determined by the angular rotation of the laser scanning assembly attained during optical alignment conditions during manufacture.

EP 2 570 843 A1 relates to a head-up display for a vehicle. An image forming apparatus includes an optical scanning device including a light source element configured to radiate a light beam, an optical deflector configured to deflect the light beam two-dimensionally, and a target scanning surface that is transparent and having a two-dimensional image formed thereon by the light beam deflected from the optical deflector, and a projection optical system including a convex mirror and configured to enlarge and project the two-dimensional image on a target projection surface. The target projection surface includes a reflection surface of a half mirror. The half mirror is positioned outside of the image forming apparatus and configured to transmit a part of a light incident on the half mirror and reflect another part of the light incident on the half mirror.

JP 2009-154264 A relates to a MEMS module. A plurality of lead pins are provided on a pedestal of the package. A lead pin insertion hole is provided at a position of the MEMS device corresponding to the lead pin. The lead pin is inserted through the lead pin insertion hole and the MEMS device is mounted on the pedestal. Thereafter, the lead pin and an electrode pad of the MEMS device are electrically connected.

WO 2014/103803 A1 relates to a MEMS optical scanner. Provided is a MEMS optical scanner that scans light stably by rotational movement of a mirror centered on the V-axis, said rotational movement being made to match a resonant frequency that makes ramp wave drive possible, while assuring impact resistance. A MEMS optical scanner is provided with: a first substrate; a drive unit that is provided with a piezoelectric film on the first substrate and drives a mirror in a first axial direction by means of the piezoelectric film; a frame that supports the drive unit; a second substrate; a support part that supports the first substrate; a border part that surrounds the support part so as to be spaced away therefrom; and an axial part that provides support of the support part and the border part along a second axial direction. The MEMS optical scanner includes a rigidity contributing part both ends of which is affixed to the second substrate along the second axial direction, and the rigidity contributing part drives the support part in the second axial direction.

### SUMMARY OF THE INVENTION

It is an objected of the present invention to provide an improved and useful optical scanning apparatus in which the above-mentioned problems are eliminated. In order to achieve the above-mentioned object, there is provided an optical scanning apparatus according to claim 1. In addition, there is provided a substrate fixing method according to claim 7. Advantageous embodiments are defined by the dependent claims.

Advantageously, an optical scanning apparatus includes a light source, an optical deflector configured to deflect a light beam emitted from the light source to be scanned, a substrate configured to have the optical deflector mounted, and a housing configured to fix the substrate. The substrate includes a plurality of through holes, the housing includes protrusions corresponding to the through holes, and the substrate is fixed to the housing by using solder in a state where the protrusions are inserted into the through holes.

Other objects, features and advantages of the present invention will become more apparent from the following detailed description when read in conjunction with the accompanying drawings.

### BRIEF DESCRIPTION OF THE DRAWINGS

Fig. 1 is a drawing illustrating an exemplary configuration of an optical system of an image display apparatus according to a first embodiment.
Fig. 2 is a drawing illustrating an exemplary hardware configuration of the image display apparatus according to the first embodiment.
Fig. 3 is an exemplary functional block diagram of the image display apparatus.
Fig. 4 is an exemplary plan view of an optical deflector included in an optical scanning apparatus.
Fig. 5 is an exemplary plan view of a substrate on which the optical deflector is mounted.
Fig. 6 is a perspective view illustrating a housing to which the optical-deflector-mounted substrate is attached.
Fig. 7 is a perspective view illustrating (six axis) directions in which a position of the optical deflector is adjusted.
Fig. 8 is a sectional view illustrating fixing the optical deflector.

### DETAILED DESCRIPTION OF THE PREFERRED EMBODIMENTS

The following describes an embodiment of the present invention referring to the drawings. In the drawings, the same reference numerals are assigned to the same elements and duplicated descriptions may be omitted.

### <First embodiment>

### (Image display apparatus)

In a first embodiment, an example will be described in which an image display apparatus including an optical scanning apparatus is applied to a HuD mounted in a vehicle (a car). The HuD is an apparatus which is mounted in a moving body including, for example, a vehicle, an airplane, and a ship, and which enables navigation information (information including speed, mileage, and the like) required for maneuvering the moving body to be recognized through a windshield, etc., of the moving body.

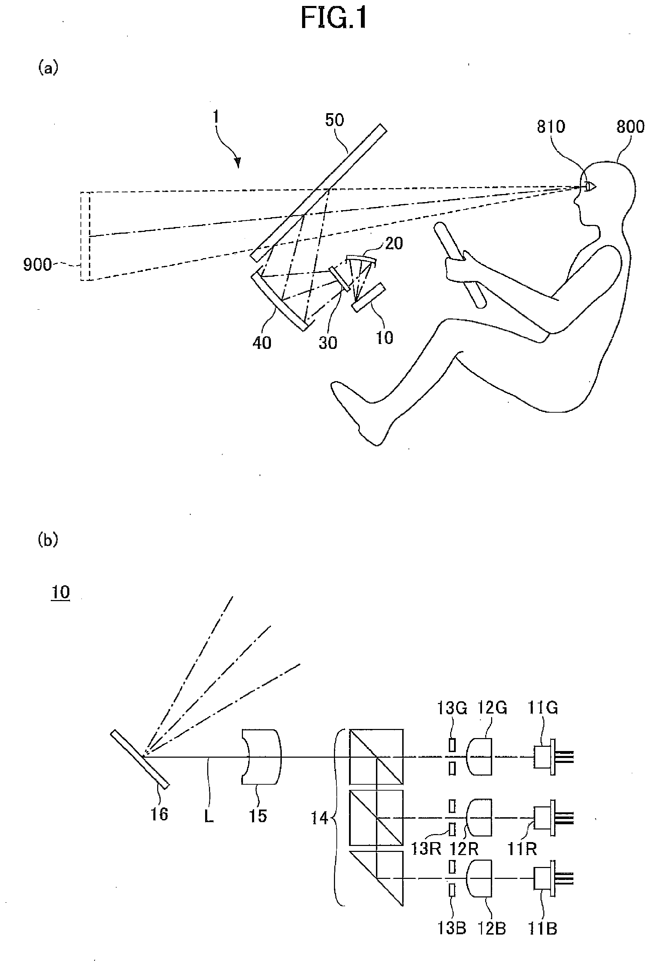

Fig. 1 is a drawing illustrating an exemplary configuration of an optical system of an image display apparatus 1 according to the first embodiment. Fig. 1(a) is an exemplary overall configuration of the image display apparatus 1 and Fig. 1(b) is an exemplary configuration of an optical scanning apparatus 10 of the image display apparatus 1.

As shown in Fig. 1(a), the image display apparatus 1 includes the optical scanning apparatus 10, a scan mirror 20, a scanned surface 30 and a reflection mirror 40. The image display apparatus 1 is an apparatus in which, by emitting light onto a windshield 50 of a vehicle, a virtual image 900 can be recognized by eyes 810 of a driver 800.

As shown in Fig. 1(b), the optical scanning apparatus 10 includes light-emitting elements 11R, 11G and 11B, coupling lenses 12R, 12G, and 12B, apertures 13R, 13G, and 13B, a composite element 14, a lens 15, and an optical deflector 16. It should be noted that the light-emitting elements 11R, 11G, and 11B may be collectively referred to as a light source.

In the optical scanning apparatus 10, the light-emitting elements 11R, 11G, and 11B are capable of emitting light beams having different wavelengths λR, λG, and λB. The wavelengths λR, λG, and λB may be, for example, 640 nm, 530 nm, and 445 nm, respectively. As the light-emitting elements 11R, 11G, and 11B, lasers, light emitting diode (LED) elements, second harmonic generation (SHG) elements, or the like may be used.

From the viewpoint of downsizing as well as assuring brightness and high image quality, it is preferable to use semiconductor lasers as the light-emitting elements 11R, 11G, and 11B. Emitting power, emitting timing, etc., of the light-emitting elements 11R, 11G, and 11B are controlled by a control unit. It should be noted that the control unit may be disposed inside or outside the optical scanning apparatus 10.

The light beams (diverging light) emitted from the light-emitting elements 11R, 11G, and 11B according to an image signal are converted to substantially parallel light or convergent light by corresponding coupling lenses 12R, 12G, and 12B, and are incident onto corresponding apertures 13R, 13G, and 13B. As the coupling lenses 12R, 12G, and 12B, convex glass lenses, plastic lenses, or the like may be used.

The apertures 13R, 13G, and 13B have a function of shaping the corresponding incident light. The apertures 13R, 13G, and 13B may have various shapes such as circular, oblong, rectangular, square according to a divergence angle, etc., of the corresponding incident light.

The light beams shaped by the apertures 13R, 13G, and 13B are incident onto the composite element 14. Because the composite element 14 has a function of synthesizing a single optical path by reflecting, or allowing penetration of, the light beams according to their wavelengths, the single optical path is synthesized from the three light beams having wavelengths λR, λG, and λB. The composite element 14 may include, for example, a prismatic dichroic mirror. The composite element 14 may also include a plurality of plate-like dichroic mirrors.

The light deflector 16 deflects the light beam L to be scanned, which light beam has been synthesized by the composite element 14 from the light beams emitted from the light source, and forms a two-dimensional image on the scanned surface 30. Specifically, the light beam L, whose optical path has been synthesized by the composite element 14, is guided to a reflection surface of the optical deflector 16 by the lens 15. As the lens 15, for example, a single meniscus lens whose concave surface facing the optical deflector 16 may be used.

The light beam L guided to the reflection surface of the optical deflector 16 is two-dimensionally deflected by the optical deflector 16. As the optical deflector 16, for example, a minute mirror capable of swinging with respect to two axes orthogonal to each other, or two minute mirrors capable of swinging or rotating with respect to one axis may be used. The optical deflector 16 may be, for example, a MEMS produced by a semiconductor process, or the like. The optical deflector 16 may be driven by, for example, an actuator whose drive force is the deformation force of a piezoelectric element.

Referring to Fig. 1(a) again, the light beam which has been two-dimensionally deflected by the optical deflector 16 is incident onto the scan mirror 20, reflected by the scan mirror 20, and draws a two-dimensional image (intermediate image) on the scanned surface 30.

The scanned surface 30 is a surface having transparency onto which the light beam reflected by the scan mirror 20 is incident, and thus, a two-dimensional image is formed on the scanned surface 30. The scanned surface 30 has a function of diverging the incident light with a desired divergence angle. The scanned surface 30 may have, for example, a micro lens array structure. As the scanned surface 30, a diffuser panel may be used.

The light beam transmitted from the scanned surface 30 is reflected by the reflex mirror 40, and incident onto the windshield 50. In other words, the two-dimensional image formed on the scanned surface 30 is projected on a reflection surface (a surface facing the driver 800) of the windshield 50. As the reflex mirror 40, for example, a single concave mirror may be used. It is preferable that the reflex mirror 40 is designed and disposed in such a way that a component of optical strain is corrected, in which strain a horizontal line of the intermediate image becomes a convex or concave line due to an influence of the windshield 50.

The windshield 50 is a semi-transparent mirror which allows visible light to partially penetrate and partially be reflected. The light beam incident onto the windshield 50 is partially reflected by the windshield 50 and is incident onto the eyes 810 of the driver 800. With the above mechanism, the driver 800 can recognize an enlarged virtual image 900 of the two-dimensional image on the scanned surface 30 at a predetermined position of the front side (opposite side of the reflex surface of the windshield 50) of the windshield 50. It should be noted that a separate semi-transparent mirror (combiner) which has the same function (partial reflection) as the windshield 50 may be used.

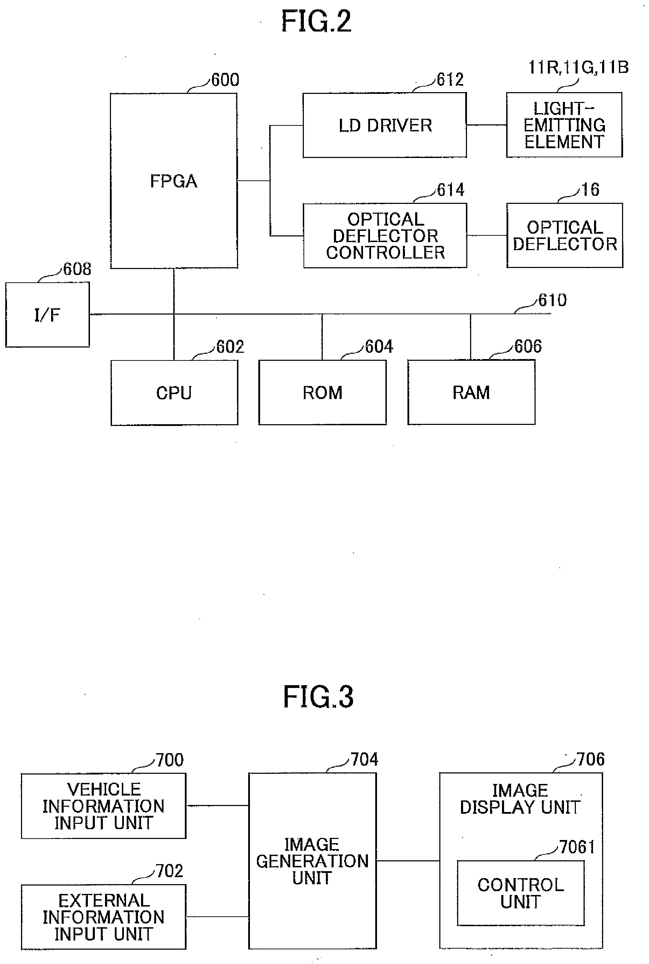

Next, a hardware configuration and functional blocks of the image display apparatus 1 will be described. Fig. 2 is a drawing illustrating an exemplary hardware configuration of the image display apparatus 1 according to the first embodiment. Referring to Fig. 2, the image display apparatus 1 includes an FPGA 600, a CPU 602, a ROM 604, a RAM 606, an I/F 608, a bus line 610, an LD driver 612, an optical deflector controller 614, etc.

The FPGA 600 is capable of causing the light-emitting elements 11R, 11G, and 11B to emit light and causing the optical deflector 16 to move for scanning by using the LD driver 612 and the optical deflector controller 614. The CPU 602 is capable of controlling functions of the image display apparatus 1. The ROM 604 is capable of storing an image processing program to be executed by the CPU 602 for controlling the functions of the image display apparatus 1. The RAM 606 is used as a work area of the CPU 602. The I/F 608 is an interface for communications with an external controller, etc., and is capable of connecting to, for example, a controller area network (CAN) of a car.

Fig. 3 is an exemplary functional block diagram of the image display apparatus 1 according to the first embodiment. Referring to Fig. 3, the image display apparatus 1 includes as functional blocks a vehicle information input unit 700, an external information input unit 702, an image generation unit 704, an image display unit 706, etc.

Vehicle information (speed, mileage, etc.) from the CAN, etc., is input to the vehicle information input unit 700. Information outside of vehicle from an external network (navigation information, etc., from GPS) is input to the external information input unit 702. The image generation unit 704 generates an image to be displayed based on, for example, the information input from the vehicle information input unit 700 and the external information input unit 702.

The image display unit 706 includes, for example, a control unit 7061, and emits light onto the windshield 50 by controlling the optical scanning apparatus 10 by using the control unit 7061. As a result, the driver 800 can recognize an enlarged virtual image 900 of the two-dimensional image on the scanned surface 30 at a predetermined position on the front side of the windshield 50.

### (Optical deflector)

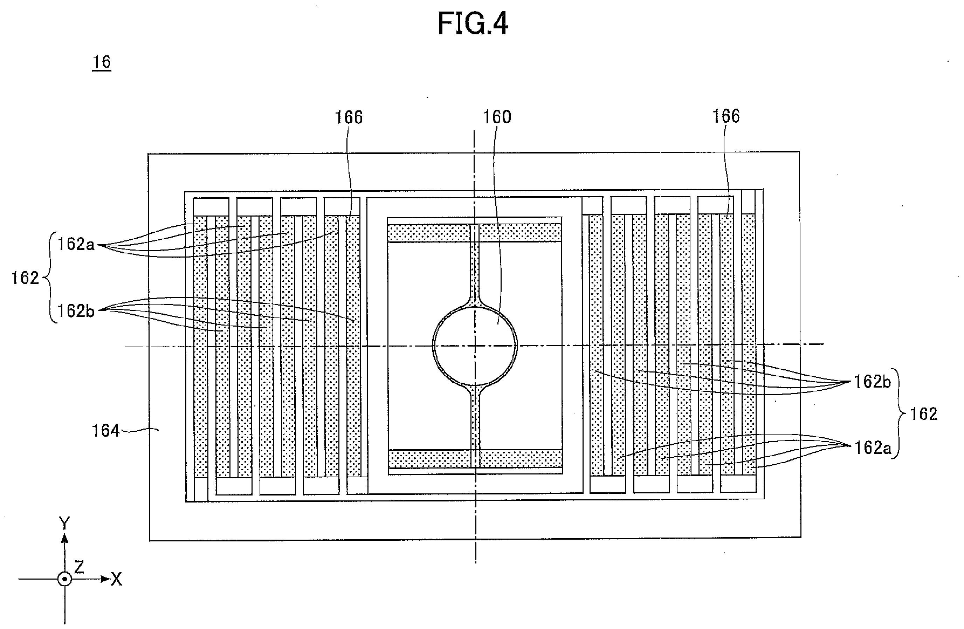

The optical deflector 16 included in the optical scanning apparatus 10 will be further described in detail. Fig. 4 is an exemplary plan view of the optical deflector 16 included in the optical scanning apparatus 10. It should be noted that in Fig. 4, it is assumed that an axis in which a mirror 160 is supported is Y axis, an axis which is orthogonal to Y axis in a surface of a frame member 164 is X axis, and an axis which is orthogonal to X axis and Y axis (an axis normal to the surface of the frame member 164) is Z axis.

Referring to Fig. 4, the optical deflector 16 is, for example, a MEMS produced by a semiconductor process, etc., and includes the mirror 160 having a reflection surface. In both sides of the mirror 160 in X axis direction, there is a pair of snake-like joist units 162 including a plurality of turn portions and having a snake-like shape. The snake-like joist units 162 include joist units 162a and joist units 162b which are disposed alternately, and are supported by a frame member 164.

In each of the joist units 162a and 162b, an independent piezoelectric member 166 (e.g., PZT) is disposed. By alternately applying different voltages to the piezoelectric members 166, warps are generated in the joist units 162a and 162b, adjacent joist units are flexed in different directions, and thus, it becomes possible for the mirror 160 to rotate with a large angle around the X-axis (i.e., in a vertical direction).

With the above mechanism, it becomes possible to scan with light in the vertical direction around the X-axis by applying a low voltage. On the other hand, in the horizontal direction around the Y-axis, it is possible to scan with light by using resonance created by a torsion bar, or the like, which is connected to the mirror 160. It should be noted that, here, an optical deflector 16 is described as capable of scanning with light in two axis directions, X-axis and Y-axis. The structure illustrated in Fig. 4 can be applied also to an optical deflector which is capable of scanning with light in a single axis direction.

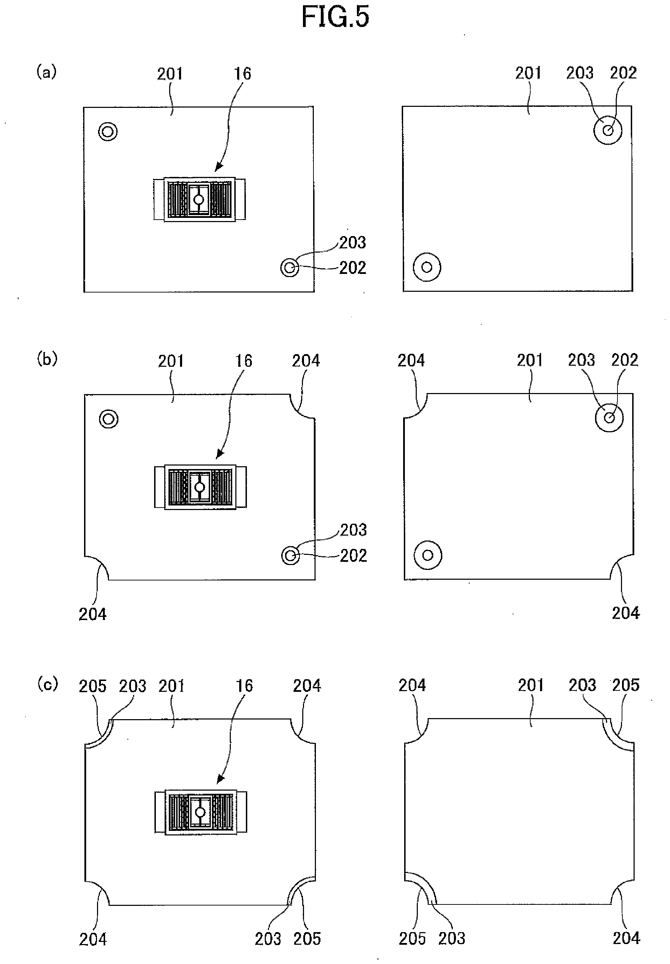

Fig. 5(a) through Fig. 5(c) are exemplary plan views of a substrate 201 on which an optical deflector 16 is mounted. It should be noted that in each figure, a left side is a top view (planar view) and a right side is a bottom view.

Referring to Fig. 5(a), the optical deflector 16 is mounted on (fixed to) the substrate 201 and is electrically connected to the optical deflector controller 614, etc., (refer to Fig. 2) mounted on the substrate 201. As the substrate 201, for example, a so-called epoxy glass substrate in which glass cloth is impregnated with an epoxy-based insulating resin, or a ceramic substrate may be used.

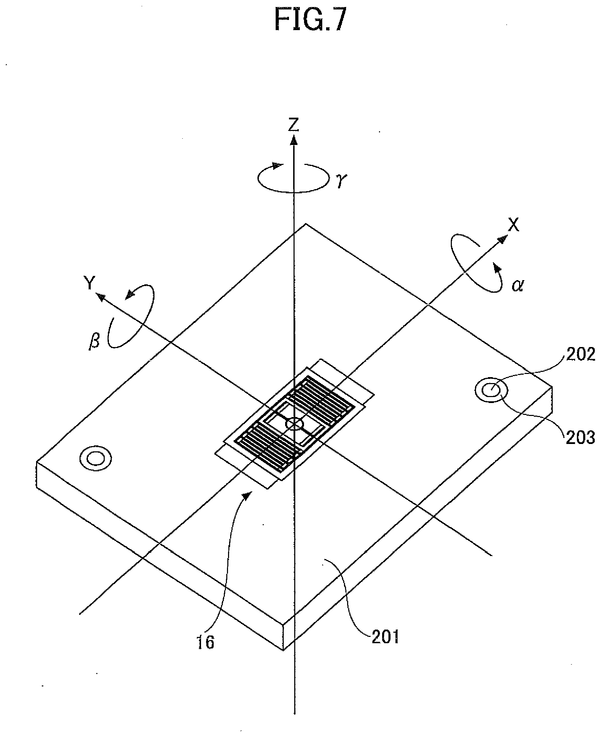

The substrate 201 has a plurality of through holes 202. In the case where a planar shape of the substrate 201 is rectangular, the through holes 202 are disposed, for example, in two corners: any corner of the substrate 201 and its diagonal corner. In both sides of the substrate 201, metalized portions 203 (metal layer) formed of gold, copper, etc., are disposed around the through holes. It should be noted that the "planar shape" refers to a shape of an object when the object is viewed from a normal direction (Z direction in Fig. 7) of a principal surface of the substrate 201 (hereinafter referred to the same).

In order to adjust a position of the optical deflector 16, it is necessary to hold the substrate 201 by using a predetermined adjustment tool. Therefore, as shown in Fig. 5(b), it is preferable to have notches 204 in one corner of the substrate 201 and its diagonal corner. With the above arrangement, it becomes easy to hold the substrate 201 when using the adjustment tool.

Further, as shown in Fig. 5(c), in place of the through holes 202 shown in Fig. 5(a) and Fig. 5(b), notches 205 may be formed in the substrate 201. With this arrangement, the size of the substrate 201 (planar shape) may be reduced. It should be noted that in both sides of the substrate 201, metalized portions 203 formed of gold, copper, etc., are disposed near the notches 205.

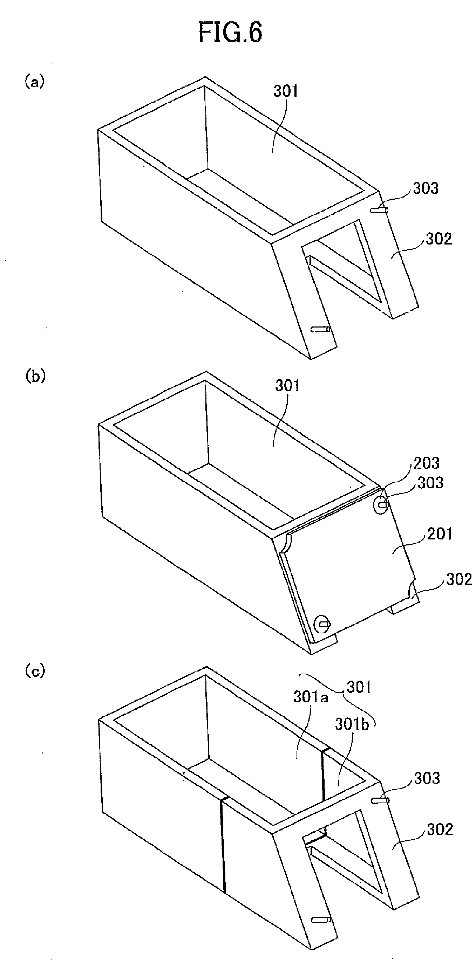

Fig. 6(a) through Fig. 6(c) are perspective views illustrating a housing 301 to which the optical-deflector-mounted substrate 201 is to be attached.

Inside of the housing 301 shown in Fig. 6(a), optical elements shown in Fig. 1(b) are housed. Further, after the position adjustment, the substrate 201 in which the optical deflector 16 is mounted is fixed to a substrate mounting surface 302 of the housing 301 while the optical deflector 16 faces the inside of the housing 301.

The substrate mounting surface 302 includes protrusions 303 corresponding to the through holes 202 of the substrate 201. In order to make smaller the positional change amounts of the optical elements due to temperature change, it is desirable to use metal as a material of the housing 301. However, a resin may also be used whose linear expansion coefficient is small. In the case where a resin is used as a material of the housing 301, it is desirable to have, as the protrusions 303, metal pins extending from the housing 301.

Relationship between a hole diameter (inner diameter) of the through holes 202 of the substrate 201 and an outer diameter of the protrusions 303 of the housing 301 is determined by considering an amount of positional adjustment of the optical deflector 16, rigidity of the protrusions 303, heat capacity for melting solder 401 (to be described later), etc.

As shown in Fig. 6(b), positional relationship between the optical deflector 16 and the light beam L is adjusted by moving the position of the substrate 201 with respect to the housing 301 in a state where the protrusions 303 of the housing 301 are inserted into the through holes 202 of the substrate 201 on which the optical deflector 16 is mounted. During the position adjustment, the substrate 201 is held by a predetermined adjustment tool, and a desired posture of the optical deflector 16 is obtained by moving the predetermined adjustment tool.

It should be noted that in order to make simple the shape of the housing 301, as shown in Fig. 6(c), the housing 301 may be separated into a housing 301a and an optical deflector mounting member 301b with the protrusions 303. The housing 301a and the optical deflector mounting member 301b may be fixed to each other by any method such as adhesive fixation. It is desirable to use metal as a material of the optical deflector mounting member 301b, but a resin with a small linear expansion coefficient may also be used. In the case where a resin is used as the material of the optical deflector mounting member 301b, it is desirable to have, as the protrusions 303, metal pins extending from the optical deflector mounting member 301b.

It should be noted that in Fig. 6(b), the positional adjustment is performed in directions of six axes (X, Y, Z, α, β, γ) shown in Fig. 7 in a state where the protrusions 303 of the housing 301 are inserted into the through holes 202 of the substrate 201 on which the optical deflector 16 is mounted.

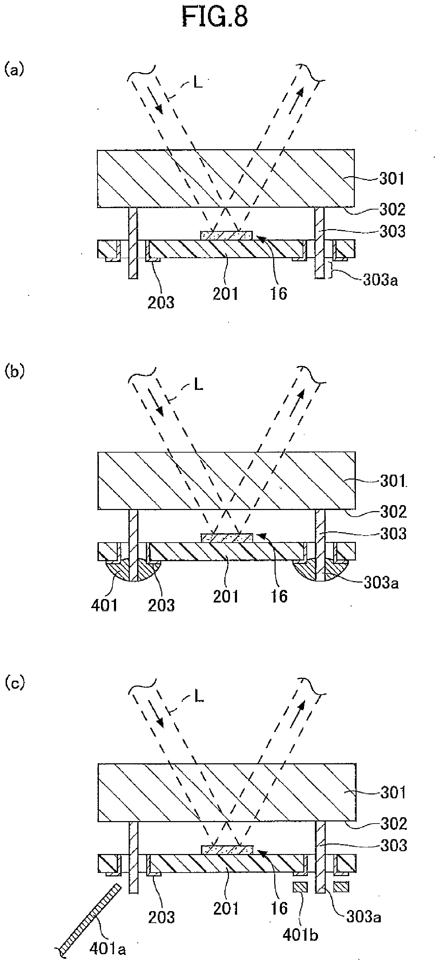

Fig. 8(a) through Fig. 8(c) are sectional views illustrating fixing the optical deflector 16. After the positional adjustment of the optical deflector 16 is completed in Fig. 6(b), the optical deflector 16 is fixed to the housing 301. Fig. 8(a) shows a state in which the optical deflector 16 has a desired posture after the positional adjustment of the optical deflector 16 is completed in Fig. 6(b). It should be noted that in Fig. 8(a), a protruding part 303a indicates a part of the protrusion 303 of the housing 301 protruding from the substrate 201 (herein after the protruding part 303a).

After the state shown in Fig. 8(a), as shown in Fig. 8(b), melted solder 401 is supplied to the protruding part 303a and the metalized portion 203 of the substrate 201. By naturally cooling or forcibly cooling the melted solder 401, the metal protruding portion 303a and the metalized portion 203 are joined by the solder 401, and the substrate 201 and the housing 301 are fixed to each other. With the above operation, the positional relationship between the optical deflector 16 and the light beam L can be fixed in the desired state.

It should be noted that linear-shaped solder 401a can be used as the solder 401 as shown in Fig. 8(c). Or, by using preformed solder 401b whose planar shape is like a donut as shown in Fig. 8(c), the solder 401b may be put around the protruding part 303a in advance before the positional adjustment of the optical deflector 16.

Further, as a method for melting the solder 401, a soldering iron may be used, or a method may be used in which, without using a soldering iron, hot air or laser light is used. It is preferable to use the method in which hot air or laser light is used, which does not put a load to the substrate 201 after the positional adjustment.

Further, in the case where the material of the housing 301 is metal and the metalized portion 203 of the substrate 201 is a ground layer, the ground layer of the substrate 201 and the protrusion 303 are electrically joined by the solder 401, and thus, the substrate 201 can be grounded.

It should be noted that it is possible to fix the protrusion 303 of the housing 301 to the substrate 201 by using adhesive instead of the solder 401. However, in the case where the adhesive is used, it becomes difficult to readjust the position of the optical deflector 16 or reuse the optical deflector 16. On the other hand, in the case where the solder 401 is used for fixing the protrusion 303 of the housing 301 to the substrate 201, by melting the solder 401 again, it becomes possible to easily readjust the position of the optical deflector 16 or reuse the optical deflector 16.

Further, solder is physically and chemically stable as compared to adhesive, and reduced fixation strength or positional change is less likely to occur even under environmental conditions required for an automotive product, and thus, the positional relationship between the light beam L and the optical deflector 16 can be maintained stable for a long time. In other words, the state in which the position of the optical deflector 16 with respect to the light beam L is adjusted in six axis directions (X, Y, Z, α, β, γ) with high accuracy can be maintained stable for a long time. It should be noted that the environmental conditions required for an automotive product are, for example, an environmental condition in which the external environmental temperature is between about - 40 °C and + 85 °C.

The preferred embodiments have been described above. However, the embodiments are not limited to those described above, and various modifications and replacements may be applied to the above embodiments.

For example, in the above embodiment, an optical scanning apparatus has been described in which an optical deflector with a single mirror is included. However, the optical deflector may be a DMD with multiple micro-mirrors. The present invention may be applied also to an optical scanning apparatus whose optical deflector is a DMD as in the case of an optical scanning apparatus whose optical deflector includes a single mirror.

The present application is based on and claims the benefit of priority of Japanese Priority Application No. 2015-045073 filed on March 6, 2015.

## Claims

1. An optical scanning apparatus (10) comprising:
a light source;
an optical deflector (16) configured to deflect a light beam emitted from the light source to scan;
a substrate (201) configured to have the optical deflector (16) mounted, thereby defining a front side of the substrate (201), and
a housing (301) configured to fix the substrate (201), wherein the light source is fixed in the housing (301), wherein the optical deflector (16) faces the inside of the housing (301);
wherein the substrate (201) includes a plurality of through holes (202),
wherein the housing (301) includes a substrate mounting surface (302) and the substrate mounting surface (302) includes the protrusions (303) corresponding to the through holes (202),
the substrate (201) is fixed to the housing (301) by using solder (401) in a state where the protrusions (303) are inserted into the through holes (202),
wherein
the protrusions (303) are metal, wherein each of the protrusions (303) has a protruding part (303a) which protrudes from the substrate (201) such that the solder (401) can be supplied to the protruding part (303a), wherein
a metal layer (203) is disposed around each of the through holes (202), and
the metal protrusion (303) and the metal layer (202) are joined by the solder (401), and the solder is a preformed solder (401b) such that the solder can be put around the protruding part (303a) in advance before the positioned adjustment of the optical deflector (16), **characterized in that** the solder is applied to the rear side of the substrate (201).

2. The optical scanning apparatus (10) according to claim 1, wherein
the substrate (201) is rectangular,
the through holes (202) are disposed at a first corner of the substrate (201) and a second corner positioned diagonal to the first corner.

3. An image display apparatus (1) comprising the optical scanning apparatus (10) according to any one of claims 1 through 2.

4. The image display apparatus (1) according to claim 3, wherein
the light source includes a plurality of light-emitting elements (11R, 11G, 11B),
after light beams emitted from the light-emitting elements are synthesized into a single light beam, the single light beam is deflected to scan to form a two-dimensional image on a scanned surface, and
the two-dimensional image is projected onto a reflex surface of a semi-transparent mirror (50) which allows visible light to partially penetrate and partially be reflected.

5. The image display apparatus (1) according to claim 4, wherein
an enlarged virtual image of the two-dimensional image is formed at a predetermined position of an opposite side of the reflex surface of the semi-transparent mirror (50).

6. A vehicle comprising:
the image display apparatus (1) according to claim 4 or 5, wherein
a driver recognizes an enlarged virtual image of the two-dimensional image at a predetermined position in front of the reflex surface of the semi-transparent mirror (50).

7. A substrate fixing method in an optical scanning apparatus (10) having a light source fixed in a housing (301) and a substrate (201) on which an optical deflector (16) is mounted, thereby defining a front side of the substrate (201), the optical deflector (16) deflecting a light beam emitted from the light source to scan, the optical deflector (16) faces the inside of the housing (301);
the method comprising:
inserting a plurality of protrusions (303) disposed in a substrate mounting surface (302) of the housing (301) into a plurality of through holes (202) disposed in the substrate (201);
adjusting a positional relationship between the optical deflector (16) and the light beam by moving a position of the substrate (201) with respect to the housing (301) in a state where the protrusions (303) are inserted into the through holes (202);
fixing the substrate (201) to the housing (301) by using solder (401) after the adjusting is completed, wherein
the protrusions (303) are metal, wherein each of the protrusions (303) has a protruding part (303a) which protrudes from the substrate (201) such that the solder (401) can be supplied to the protruding part (303a), wherein
a metal layer (203) is disposed around each of the through holes (302), wherein in the fixing, the metal protrusion (303) and the metal layer (203) are joined by the solder (401),
and
the solder is a preformed solder (401b) such that the solder can be put around the protruding part (303a) in advance before the positioned adjustment of the optical deflector (16), the method is **characterized by** applying the solder to the rear side of the substrate (201).

8. The substrate fixing method according to claim 7, wherein
the substrate (201) is rectangular,
the through holes (202) are disposed at a first corner of the substrate (201) and a second corner positioned diagonal to the first corner.

## Patentansprüche

1. Optische Abtastvorrichtung (10), die Folgendes umfasst:
eine Lichtquelle;
ein optisches Ablenkelement (16), das konfiguriert ist, einen von der abzutastenden Lichtquelle ausgesendeten Lichtstrahl abzulenken;
ein Substrat (201), das so konfiguriert ist, dass das optische Ablenkelement (16) an ihm angebracht ist, wodurch eine Vorderseite des Substrats (201) definiert wird, und
ein Gehäuse (301), das konfiguriert ist, das Substrat (201) zu fixieren, wobei die Lichtquelle in dem Gehäuse (301) fixiert ist, wobei das optische Ablenkelement (16) dem Innern des Gehäuses (301) zugewandt ist;
wobei das Substrat (201) mehrere Durchgangslöcher (202) enthält,
wobei das Gehäuse (301) eine Substratbefestigungsfläche (302) enthält und die Substratbefestigungsfläche (302) die Vorsprünge (303) enthält, die den Durchgangslöchern (202) entsprechen,
wobei das Substrat (201) an dem Gehäuse (301) durch Verwenden eines Lötmittels (401) in einem Zustand, in dem die Vorsprünge (303) in die Durchgangslöcher (202) eingefügt sind, befestigt ist,
wobei
die Vorsprünge (303) Metall sind, wobei jeder der Vorsprünge (303) einen vorstehenden Teil (303a) besitzt, der von dem Substrat (201) derart vorsteht, dass das Lötmittel (401) dem vorstehenden Teil (303a) zugeführt werden kann, wobei
eine Metallschicht (203) um jedes der Durchgangslöcher (202) angeordnet ist und
der Metallvorsprung (303) und die Metallschicht (202) durch das Lötmittel (401) verbunden sind und
das Lötmittel ein vorgeformtes Lötmittel (401b) ist, derart, dass das Lötmittel im Voraus vor der Positionsanpassung des optischen Ablenkelements (16) um den vorstehenden Teil (303a) gegeben werden kann, **dadurch gekennzeichnet, dass** das Lötmittel auf die Rückseite des Substrats (201) aufgebracht wird.

2. Optische Abtastvorrichtung (10) nach Anspruch 1, wobei
das Substrat (201) rechteckig ist,
die Durchgangslöcher (202) an einer ersten Ecke des Substrats (201) und einer zweiten Ecke, die diagonal zu der ersten Ecke positioniert ist, angeordnet sind.

3. Bildanzeigevorrichtung (1), die die optische Abtastvorrichtung (10) nach einem der Ansprüche 1 bis 2 umfasst.

4. Bildanzeigevorrichtung (1) nach Anspruch 3, wobei
die Lichtquelle mehrere lichtaussendende Elemente (11R, 11G, 11B) enthält,
nachdem von den lichtaussendenden Elementen ausgesendete Lichtstrahlen in einen einzigen Lichtstrahl synthetisiert worden sind, der einzige Lichtstrahl abgelenkt wird, um abzutasten, um ein zweidimensionales Bild auf einer abgetasteten Fläche zu erzeugen, und
das zweidimensionale Bild auf eine Spiegelungsfläche eines halbdurchlässigen Spiegels (50) projiziert wird, der erlaubt, dass sichtbares Licht teilweise eindringt und teilweise reflektiert wird.

5. Bildanzeigevorrichtung (1) nach Anspruch 4, wobei
ein vergrößertes virtuelles Bild des zweidimensionalen Bilds an einer vorgegebenen Position einer gegenüberliegenden Seite der Spiegelungsfläche des halbdurchlässigen Spiegels (50) erzeugt wird.

6. Fahrzeug, das Folgendes umfasst:
eine Bildanzeigevorrichtung (1) nach Anspruch 4 oder 5, wobei
ein Fahrer ein vergrößertes virtuelles Bild des zweidimensionalen Bilds an einer vorgegebenen Position vor der Spiegelungsfläche des halbdurchlässigen Spiegels (50) erkennt.

7. Substratbefestigungsverfahren in einer optischen Abtastvorrichtung (10) mit einer Lichtquelle, die in einem Gehäuse (301) fixiert ist, und einem Substrat (201), auf dem ein optisches Ablenkelement (16) angebracht ist, wodurch eine Vorderseite des Substrats (201) definiert wird,
wobei das optische Ablenkelement (16) einen von der abzutastenden Lichtquelle ausgesendeten Lichtstrahl ablenkt, wobei das optische Ablenkelement (16) dem Innern des Gehäuses (301) zugewandt ist;
wobei das Verfahren Folgendes umfasst:
Einfügen mehrerer Vorsprünge (303), die in einer Substratbefestigungsfläche (302) des Gehäuses (301) angeordnet sind, in mehrere Durchgangslöcher (202), die in dem Substrat (201) angeordnet sind;
Anpassen einer Positionsbeziehung zwischen dem optischen Ablenkelement (16) und dem Lichtstrahl durch Bewegen einer Position des Substrats (201) in Bezug auf das Gehäuse (301) in einem Zustand, in dem die Vorsprünge (303) in die Durchgangslöcher (202) eingefügt sind;
Fixieren des Substrats (201) an dem Gehäuse (301) durch Verwenden von Lötmittel (401), nachdem das Anpassen abgeschlossen ist, wobei
die Vorsprünge (303) aus Metall sind, wobei jeder der Vorsprünge (303) einen vorstehenden Teil (303a) besitzt, der von dem Substrat (201) derart vorsteht, dass das Lötmittel (401) dem vorstehenden Teil (303a) zugeführt werden kann, wobei
eine Metallschicht (203) um jedes der Durchgangslöcher (302) angeordnet ist, wobei in der Fixierung der Metallvorsprung (303) und die Metallschicht (203) durch das Lötmittel (401) verbunden sind,
und
das Lötmittel ein vorgeformtes Lötmittel (401b) ist, derart, dass das Lötmittel im Voraus vor der Positionsanpassung das optischen Ablenkelements (16) um den vorstehenden Teil (303a) gegeben werden kann, wobei das Verfahren durch Aufbringen des Lötmittels auf die Rückseite des Substrats (201) gekennzeichnet ist.

8. Substratbefestigungsverfahren nach Anspruch 7, wobei
das Substrat (201) rechteckig ist und
die Durchgangslöcher (202) an einer ersten Ecke des Substrats (201) und einer zweiten Ecke, die diagonal zu der ersten Ecke positioniert ist, angeordnet sind.

## Revendications

1. Appareil de balayage optique (10) comprenant :
une source de lumière ;
un déflecteur optique (16) conçu pour dévier un faisceau de lumière émis depuis la source de lumière à balayer ;
un substrat (201) conçu pour présenter le déflecteur optique (16) monté, permettant ainsi de définir un côté avant du substrat (201), et
un boîtier (301) conçu pour fixer le substrat (201), la source de lumière étant fixée dans le boîtier (301), le déflecteur optique (16) faisant face au côté intérieur du boîtier (301) ;
le substrat (201) comprenant une pluralité de trous traversants (202),
le boîtier (301) comprenant une surface de montage de substrat (302) et la surface de montage de substrat (302) comprenant les saillies (303) correspondant aux trous traversants (202),
le substrat (201) étant fixé au boîtier (301) au moyen d'une soudure (401) dans un état où les saillies (303) sont insérées dans les trous traversants (202),
les saillies (303) étant en métal, chacune des saillies (303) comportant une partie saillante (303a) qui fait saillie depuis le substrat (201) de manière que la soudure (401) peut être fournie à la partie saillante (303a),
une couche métallique (203) étant disposée autour de chacun des trous traversants (202), et
la saillie métallique (303) et la couche métallique (202) sont reliées par la soudure (401), et la soudure est une soudure préformée (401b) de manière que la soudure peut être placée autour de la partie saillante (303a) à l'avance avant le réglage positionné du déflecteur optique (16), **caractérisé en ce que** la soudure est appliquée au côté arrière du substrat (201).

2. Appareil de balayage optique (10) selon la revendication 1, dans lequel
le substrat (201) est rectangulaire,
les trous traversants (202) sont disposés dans un premier angle du substrat (201) et un deuxième angle positionné en diagonale par rapport au premier angle.

3. Appareil d'affichage d'image (1) comprenant l'appareil de balayage optique (10) selon l'une quelconque des revendications 1 et 2.

4. Appareil d'affichage d'image (1) selon la revendication 3, dans lequel
la source lumière comprend une pluralité d'éléments électroluminescents (11R, 11G, 11B),
après que des faisceaux de lumière émis depuis les éléments électroluminescents sont synthétisés en un simple faisceau de lumière, le simple faisceau de lumière est dévié pour balayer afin de former une image bidimensionnelle sur une surface balayée, et
l'image bidimensionnelle est projetée sur une surface réfléchissante d'un miroir semi-transparent (50) qui permet à une lumière visible de pénétrer partiellement et d'être partiellement réfléchie.

5. Appareil d'affichage d'image (1) selon la revendication 4, dans lequel
une image virtuelle agrandie de l'image bidimensionnelle est formée dans une position prédéterminée sur un côté opposé de la surface réfléchissante du miroir semi-transparent (50).

6. Véhicule comprenant :
l'appareil d'affichage d'image (1) selon la revendication 4 ou 5, dans lequel
un conducteur reconnaissant une image virtuelle agrandie de l'image bidimensionnelle dans une position prédéterminée devant la surface réfléchissante du miroir semi-transparent (50).

7. Procédé de fixation de substrat dans un appareil de balayage optique (10) présentant une source de lumière fixée dans un boîtier (301) et un substrat (201) sur lequel un déflecteur optique (16) est monté, permettant ainsi de définir un côté avant du substrat (201),
le déflecteur optique (16) déviant un faisceau de lumière émis depuis la source de lumière pour balayer, le déflecteur optique (16) faisant face au côté intérieur du boîtier (301) ;
le procédé comprenant :
l'insertion d'une pluralité de saillies (303) disposées dans une surface de montage de substrat (302) du boîtier (301) dans une pluralité de trous traversants (202) disposés dans le substrat (201) ;
le réglage d'une relation de position entre le déflecteur optique (16) et le faisceau de lumière par le déplacement d'une position du substrat (201) par rapport au boîtier (301) dans un état où les saillies (303) sont insérées dans les trous traversants (202) ;
la fixation du substrat (201) au boîtier (301) au moyen d'une soudure (401) après que le réglage a été effectué,
les saillies (303) étant en métal, chacune des saillies (303) comportant une partie saillante (303a) qui fait saillie depuis le substrat (201) de manière que la soudure (401) peut être fournie à la partie saillante (303a),
une couche métallique (203) étant disposée autour de chacun des trous traversants (302), dans la fixation, la saillie métallique (303) et la couche métallique (203) étant reliées par la soudure (401),
et
la soudure est une soudure préformée (401b) de manière que la soudure peut être placée autour de la partie saillante (303a) à l'avance avant le réglage positionné du déflecteur optique (16), le procédé étant **caractérisé par** l'application de la soudure au côté arrière du substrat (201).

8. Procédé de fixation de substrat selon la revendication 7, dans lequel
le substrat (201) est rectangulaire,
les trous traversants (202) sont disposés dans un premier angle du substrat (201) et un deuxième angle positionné en diagonale par rapport au premier angle.
